# EUROPEAN PATENT APPLICATION

(11) **EP 4 661 500 A1**
(43) Date of publication of application: **10.12.2025**
(21) Application number: 23921955.3
(22) Date of filing: 17.02.2023
(51) Int. Cl.: H04W 36/08

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Mewburn Ellis LLP
(86) International application number: PCT/CN2023/076758
(87) International publication number: WO 2024/168805

(57) **Abstract**

A method for wireless communication, a terminal device, and a network device are provided. The method includes the following. A terminal device receives first candidate cell configuration information sent by a network device, where the first candidate cell configuration information includes one or more of: a first conditional primary secondary cell (PSCell) addition/change (CPAC) candidate cell configuration associated with a first conditional handover (CHO) cell configuration, a second CPAC candidate cell configuration, and a third CPAC candidate cell configuration associated with selective activation of cell groups (SACG). In the embodiments of the present disclosure, by specifying one or more of different storage manners, transmission manners, and validity times for multiple CPAC candidate cell configurations (e.g., at least two of the first CPAC candidate cell configuration, the second CPAC candidate cell configuration, and the third CPAC candidate cell configuration), it facilitates the terminal device in distinguishing among the multiple CPAC candidate cell configurations, thereby avoiding confusion among the multiple CPAC candidate cell configurations.

## Description

### TECHNICAL FIELD

The present disclosure relates to the field of communication technology, and in particularly to a method for wireless communication, a terminal device, and a network device.

### BACKGROUND

In some scenarios, a network device may configure, for a terminal device, conditional primary secondary cell (PSCell) addition/change (CPAC) candidate cell configurations associated with multiple procedures, such as a CPAC procedure, a procedure of conditional handover (CHO) in combination with CPAC (referred to as "CHO+CPAC procedure"), and a selective activation of cell groups (SACG) procedure.

For example, the network device may configure, for the terminal device, at least two of the following: a CPAC candidate cell configuration associated with the CHO+CPAC procedure (also referred to as "first CPAC candidate cell configuration"), a CPAC configuration associated with the CPAC procedure (also referred to as "second CPAC candidate cell configuration"), and a CPAC candidate cell configuration associated with SACG (also referred to as "third CPAC candidate cell configuration"). However, the terminal device is unable to distinguish among the procedures associated with the obtained CPAC candidate cell configurations, which may cause confusion among CPAC candidate cell configurations associated with multiple procedures.

### SUMMARY

The embodiments of the present disclosure provide a method for wireless communication, a terminal device, and a network device. Various aspects involved in the present disclosure are described below.

In a first aspect, a method for wireless communication is provided. The method includes: receiving, by a terminal device, first candidate cell configuration information transmitted by a network device, where the first candidate cell configuration information includes one or more of: a first conditional primary secondary cell (PSCell) addition/change (CPAC) candidate cell configuration associated with a first conditional handover (CHO) cell configuration; a second CPAC candidate cell configuration; and a third CPAC candidate cell configuration associated with selective activation of cell groups (SACG). Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In a second aspect, a method for wireless communication is provided. The method includes: transmitting, by a network device, first candidate cell configuration information to a terminal device, where the first candidate cell configuration information includes one or more of: a first CPAC candidate cell configuration associated with a first CHO cell configuration; a second CPAC candidate cell configuration; and a third CPAC candidate cell configuration associated with SACG. Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In a third aspect, a terminal device is provided. The terminal device includes a receiving unit configured to receive first candidate cell configuration information transmitted by a network device, where the first candidate cell configuration information includes one or more of: a first CPAC candidate cell configuration associated with a first CHO cell configuration; a second CPAC candidate cell configuration; and a third CPAC candidate cell configuration associated with SACG. Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In a fourth aspect, a network device is provided. The network device includes a transmitting unit configured to transmit first candidate cell configuration information to a terminal device, where the first candidate cell configuration information includes one or more of: a first CPAC candidate cell configuration associated with a first CHO cell configuration; a second CPAC candidate cell configuration; and a third CPAC candidate cell configuration associated with SACG. Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In a fifth aspect, a terminal device is provided. The terminal device includes a processor, a memory, and a communication interface, where the memory is configured to store one or more computer programs, and the processor is configured to call the computer programs stored in the memory such that the terminal device performs part or all of the steps in the method of the first aspect.

In a sixth aspect, a network device is provided. The network device includes a processor, a memory, and a transceiver, where the memory is configured to store one or more computer programs, and the processor is configured to call the computer programs stored in the memory such that the network device performs part or all of the steps in the method of the second aspect.

In a seventh aspect, a communication system is provided in the embodiments of the present disclosure. The system includes the terminal device and/or the network device described above. In another possible design, the system may further include other devices that can interact with the terminal device or the network device in the solutions of the embodiments of the present disclosure.

In an eighth aspect, a computer-readable storage medium is provided in the embodiments of the present disclosure. The computer-readable storage medium stores a computer program, where the computer program causes a communication device (e.g., a terminal device or a network device) to perform part or all of the steps of each of the methods in the above aspects.

In a ninth aspect, a computer program product is provided in the embodiments of the present disclosure. The computer program product includes a non-transitory computer-readable storage medium storing a computer program, which is operable to cause a communication device (e.g., a terminal device or a network device) to perform part or all of the steps of each of the methods in the above aspects. In some embodiments, the computer program product may be a software installation package.

In a tenth aspect, a chip is provided in the embodiments of the present disclosure. The chip includes a memory and a processor, where the processor can call and run a computer program from the memory to implement part or all of the steps of each the methods in the above aspects.

In the embodiments of the present disclosure, by specifying different storage manners, transmission manners, and/or validity times for multiple CPAC candidate cell configurations (e.g., at least two of the first CPAC candidate cell configuration, the second CPAC candidate cell configuration, and the third CPAC candidate cell configuration), which helps the terminal device distinguish among multiple CPAC candidate cell configurations, thereby avoiding confusion among multiple CPAC candidate cell configurations.

### BRIEF DESCRIPTION OF THE DRAWINGS

FIG. 1 is a schematic diagram of a wireless communication system 100 to which embodiments of the present disclosure are applicable.
FIG. 2 is a schematic diagram of a conventional handover procedure applicable to the embodiments of the present disclosure.
FIG. 3 is a schematic flow chart of a method for wireless communication according to the embodiments of the present disclosure.
FIG. 4 is a schematic diagram of configurations stored in a terminal device according to the embodiments of the present disclosure.
FIG. 5 is a schematic diagram of a terminal device according to the embodiments of the present disclosure.
FIG. 6 is a schematic diagram of a network device according to the embodiments of the present disclosure.
FIG. 7 is a schematic structural diagram of a communication apparatus according to the embodiments of the present disclosure.

### DETAILED DESCRIPTION

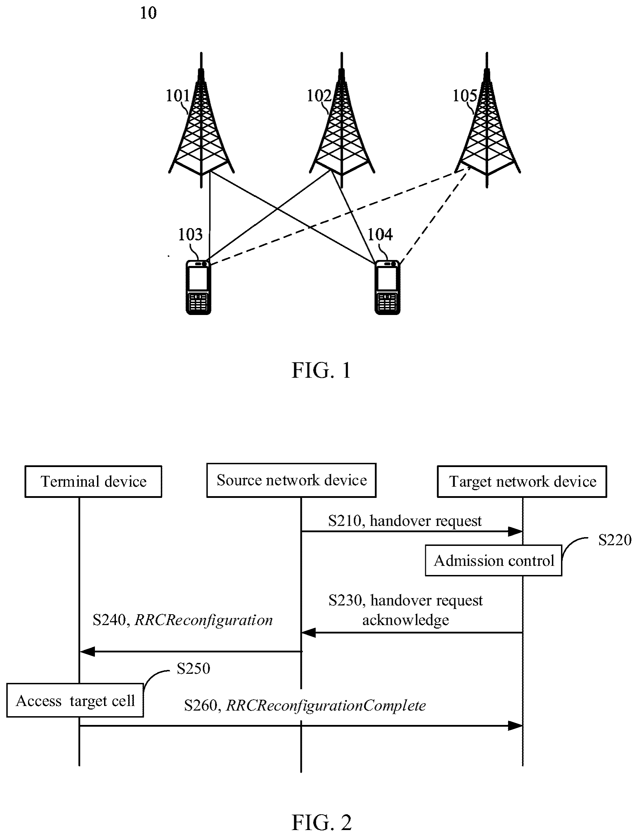

The technical solutions of the present disclosure will be described below with reference to the accompanying drawings. For ease of understanding, a communication scenario to which the embodiments of the present disclosure are applicable is first described below with reference to FIG. 1.

The methods provided in the embodiments of the present disclosure can be applied to various multiple radio access technology (RAT) dual connectivity (DC) (MR-DC) architectures, for example, DC between a fourth generation (4G) communication system and a fifth generation (5G) communication system, DC between a 5G communication system and a 4G communication system, or DC between 5G communication systems, and the like.

The above-mentioned DC between the 4G communication system and the 5G communication system may include: evolved universal terrestrial radio access (E-UTRA)-new radio (NR) dual connectivity (EN-DC), and NG-RAN E-UTRA-NR dual connectivity (NGEN-DC) under a 5G core network, and the like. EN-DC may also be referred to as an option 3 series. EN-DC refers to DC in which a long term evolution (LTE) base station, such as an eNB, serves as a master node (MN) or master base station, and an NR base station, such as a gNB, serves as a secondary node (SN) or secondary base station, and both the MN and the SN may have data plane connection with an evolved packet core (EPC), i.e., 4G core network, to provide air interface transmission resources for data between a terminal and the EPC. NG EN-DC may also be referred to as an option 7 series. NG EN-DC refers to DC in which an LTE base station, such as an ng-eNB, serves as an MN, and an NR base station, such as a gNB, serves as an SN. Unlike EN-DC, in NG EN-DC, both the MN and the SN are connected to a 5G core network (5GC) to provide air interface transmission resources for data between the terminal and the 5GC.

DC between the 5G communication system and the 4G communication system may include NR E-UTRA dual connectivity (NE-DC), and the like. NE-DC may also be referred to as an option 4 series. NE-DC refers to DC in which an NR base station, such as a gNB, serves as an MN, and an LTE base station, such as an ng-eNB, serves as an SN, and both the MN and the SN may have data plane connection with the 5GC to provide air interface transmission resources for data between the terminal and the 5GC.

DC between the 5G communication systems may include NR-NR DC. In NR-NR DC, both an MN and an SN are NR base stations.

The methods provided in the embodiments of the present disclosure are described below by taking a communication system 10 as illustrated in FIG. 1 as an example.

FIG. 1 is a schematic diagram of an architecture of the communication system 10 provided in the embodiments of the present disclosure. As illustrated in FIG. 1, the communication system 10 may include a network device 101, a network device 102, a network device 105, a terminal device 103, and a terminal device 104. FIG. 1 is merely a schematic diagram and does not construct a limitation on the applicable scenarios of the technical solutions provided in the present disclosure.

The network device in FIG. 1, i.e., the network device 101, the network device 102, or the network device 105, may be any type of device having a wireless transmission and reception process, including but not limited to: an evolved Node B (eNB or e-NodeB) in LTE, a base station (gNodeB or gNB) or transmission/reception point (TRP) in NR, or other similar stations in subsequent evolutions of 3rd generation partnership project (3GPP). The base station may be a macro base station, a micro base station, a pico base station, a femto base station, a relay station, a balloon station, and the like. Multiple base stations may support a network of the same technology as mentioned above, and also support networks of different technologies mentioned above. A base station may include one or more TRPs that are co-located or non-co-located. The network device may also be a radio controller, a centralized unit (CU), and/or a distributed unit (DU) in a cloud radio access network (CRAN) scenario.

The terminal device in FIG. 1, i.e., the terminal device 103 or the terminal device 104, may be a device having a wireless transmission and reception process. The terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.). The terminal device may be a mobile phone, a pad, a computer with wireless transceiver functions, a virtual reality (VR) terminal device, an augmented reality (AR) terminal device, a terminal in industrial control, a vehicle-mounted terminal, a terminal in self driving, a terminal in assisted driving, a terminal in remote medicine, a terminal in smart grid, a terminal in transportation safety, a terminal device in smart city, or a terminal in smart home, etc. In the embodiments of the present disclosure, the application scenarios are not limited. A terminal may also be referred to as a terminal device, user equipment (UE), access terminal, vehicle-mounted terminal, industrial control terminal, UE unit, UE station, mobile station, mobile platform, remote station, remote terminal, mobile device, UE terminal device, wireless communication device, machine terminal, UE agent, UE apparatus, and the like. The terminal may be fixed or mobile.

By way of explanation rather than limitation, in the embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize powerful procedures through software support, data interaction, and cloud interaction. A wearable smart device in a broad sense includes, for example, a smart watch or smart glasses with complete procedures and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In order to facilitate understanding, communication procedures involved in the embodiments of the present disclosure are described below.

### Conventional handover procedure

Similar to the LTE system, the NR system can support a handover procedure by a terminal device in a connected state. When a terminal device currently using network services moves from one cell to another cell, or due to reasons such as adjustment of wireless transmission load, activation for maintenance operation, equipment failure, and the like, in order to ensure continuity of communication and quality of service, the network device needs to switch the communication link between the terminal device and a source cell (also referred to as a "source base station") to a new cell (also referred to as a "target cell" or "target base station"), i.e., to perform a handover procedure.

In order to facilitate understanding, a conventional handover procedure is described below with reference to FIG. 2. Referring to FIG. 2, the method as illustrated in FIG. 2 includes steps S210 to S260.

In step S210, a source network device triggers handover based on L3 measurement results reported by a terminal device, and sends via an Xn interface a handover request to a target network device where the target cell is located.

In step S220, in response to the handover request, the target network device performs admission control.

In step S230, the target network device sends a handover request acknowledge message to the source network device.

In some implementations, the handover request acknowledge message may contain an RRC configuration of the target cell.

In step S240, the source network device sends an RRC reconfiguration message to the terminal device, instructing the terminal device to initiate a handover procedure.

In some implementations, the RRC reconfiguration message contains RRC configuration information for accessing the target cell.

In step S250, the terminal device accesses the target cell.

In step S260, the terminal device sends an RRC reconfiguration complete message to the target network device.

In some implementations, upon reception of the handover command by the terminal device, the main behaviors at various protocol layers may be as illustrated in Table 1. For a packet data convergence protocol (PDCP) layer, if the terminal device performs re-establishment based on a handover command, the terminal device needs to perform a security update. Accordingly, if the terminal device performs data recovery at the PDCP layer based on the handover command, the terminal device does not need to perform a security update.

For a radio link control (RLC) layer, if the terminal device performs re-establishment based on the handover command, the terminal device may need to perform a security update, or may not need to perform a security update.

For a media access control (MAC) layer, if the terminal device performs re-establishment based on the handover command, the terminal device may need to perform a security update, or may not need to perform a security update.

**Table 1**

| Operation at protocol layer | Handover that needs security update | Handover that does not needs security update |
|---|---|---|
| PDCP layer | Re-establishment | Data recovery at PDCP layer |
| RLC layer | Re-establishment | Re-establishment |
| MAC layer | Re-establishment | Re-establishment |

It may be noted that, in the embodiments of the present disclosure, the content of the above security update is not specifically limited. For example, the security update may include key update. In another example, the security update may include encryption algorithm update. In yet another example, the security update may include integrity protection algorithm update.

Additionally, in the embodiments of the present disclosure, the content of the above security update may be indicated via the RRC reconfiguration message. Of course, the content of the above security update may also be indicated in other manners, which is not limited in the embodiments of present disclosure.

It may also be noted that, in the embodiments of the present disclosure, the operation at protocol layers may be determined via the RRC reconfiguration message. For example, whether to perform PDCP re-establishment may be determined via the RRC reconfiguration message. In another example, whether to perform data recovery at the PDCP layer may be determined via the RRC reconfiguration message. In yet another example, whether to perform RLC re-establishment may be determined via the RRC reconfiguration message. Of course, the operations at protocol layers may also be indicated in other manners in the embodiments of the present disclosure.

It may also be noted that, in the embodiments of the present disclosure, the PDCP layer may be responsible for data-related security operations. For example, the PDCP layer may perform one or more of the following: encryption at an access stratum (AS) layer, decryption at the AS layer, and integrity protection. Of course, the PDCP layer may also perform other operations in the embodiments of the present disclosure.

Conditional primary secondary cell (PSCell) addition/change (CPAC) procedure

To facilitate understanding, the CPAC procedure is illustrated in conjunction with FIG. 1. In FIG. 1, the terminal device 103 or terminal device 104 may establish DC with the network device 101 and network device 102, where one network device serves as an MN and the other network device serves as an SN. One or more serving cells in the MN belong to a master cell group (MCG). Typically, the MCG may include a primary cell (PCell). In some implementations, the MCG may include one or more secondary cells (SCells) in addition to the PCell. One or more serving cells in the SN belong to a secondary cell group (SCG). Typically, the SCG may include a PSCell. In some implementations, the SCG may include one or more SCells in addition to the PSCell.

In the communication system 10 as illustrated in FIG. 1, the terminal device 103 or terminal device 104 may perform CPAC. For example, the terminal device 103 may perform conditional PSCell addition (CPA) via the following Example 1, and perform conditional PSCell change (CPC) via the following Example 2.

**Example 1:** For example, the terminal device 103 has established an RRC connection with the network device 101 and intends to perform CPA to establish connectivity with the network device 102. After establishing the RRC connection with the terminal device 103, the network device 101 may configure one or more candidate PSCells for the terminal device 103. The one or more candidate PSCells include a PSCell configured by the network device 102 for the terminal device 103 and a PSCell(s) configured by other network devices for the terminal device 103. The network device 101 transmits configuration information 1 of the one or more candidate PSCells to the terminal device 103. The configuration information 1 of the one or more candidate PSCells includes configuration 1 and an addition condition of the one or more candidate PSCells. Upon reception of the configuration information 1 of the one or more candidate PSCells from the network device 101, the terminal device 103 may detect the addition condition of the one or more candidate PSCells. When at least one candidate PSCell satisfying the addition condition is detected by the terminal device 103, the terminal device 103 selects one of the candidate PSCells (e.g., the candidate PSCell configured by the network device 102 for the terminal device), and applies the configuration of the selected candidate PSCell. Subsequently, the terminal device 103 initiates random access to the selected candidate PSCell, and upon successful random access to the candidate PSCell, the terminal device 103 establishes DC with the network device 101 and network device 102. The configuration information 1 of the candidate PSCell may also be referred to as CPA configuration information 1 of the candidate PSCell, and the naming of such configuration information is not limited in the embodiments of the present disclosure.

It may be understood that, when the terminal device 103 detects multiple candidate PSCells that satisfy the addition condition, the terminal device 103 may select one of the candidate PSCells based on a preset policy and apply the configuration of the selected candidate PSCell. For example, when the terminal device 103 detects multiple candidate PSCells that satisfy the addition condition, the terminal device 103 may randomly select one of the candidate PSCells and apply the configuration of the selected candidate PSCll; or, the terminal device 103 may select a candidate PSCell with the best signal quality among the multiple candidate PSCells satisfying the addition condition and apply the configuration of the selected candidate PSCell; or, the terminal device 103 may select a candidate PSCell with the largest number of beams among those candidate PSCells that satisfy the addition condition and have a number of beams greater than or equal to a threshold, and apply the configuration of the selected candidate PSCell. The above are merely examples of how the terminal device 103 selects a candidate PSCell, and the terminal device 103 may also select a candidate PSCell in other manners, which are not limited herein.

**Example 2:** For example, the terminal device 103 has established DC with the network device 101 and the network device 102, where the network device 101 serves as an MN and the network device 102 serves as an SN, and the terminal device 103 intends to perform CPC. The network device 101 may configure one or more candidate PSCells for the terminal device 103. The network device 101 transmits configuration information 2 of the one or more candidate PSCells to the terminal device 103, where configuration information 2 of the one or more candidate PSCells includes configuration 2 and a change condition of the one or more candidate PSCells. Upon reception of configuration information 2 of the one or more candidate PSCells from the network device 101, the terminal device 103 may detect the change condition of the one or more candidate PSCells. When at least one candidate PSCell that satisfies the change condition is detected by the terminal device 103, the terminal device 103 selects one candidate PSCell and applies the configuration of the selected candidate PSCell. Subsequently, the terminal device 103 performs random access to the selected candidate PSCell, and upon successful random access to the selected candidate PSCell, the terminal device 103 establishes DC with the network device 101 and a secondary base station to which the candidate PSCell belongs. The configuration information 2 of the candidate PSCell may also be referred to as CPC configuration information 2 of the candidate PSCell, and the naming of such configuration information is not limited herein.

It may be understood that, when the terminal device 103 detects multiple candidate PSCells that satisfy the change condition, the terminal device may select one candidate PSCell based on a predefined policy and apply the configuration of the selected candidate PSCell. For example, when the terminal device 103 detects multiple candidate PSCells that satisfy the change condition, the terminal device 103 may randomly select one candidate PSCell and apply the configuration of the selected candidate PSCell; or, the terminal device 103 may select the candidate PSCell with the best signal quality among the multiple candidate PSCells satisfying the change condition and apply the configuration of the selected candidate PSCell; or the terminal device 103 may select a candidate PSCell with the largest number of beams among those candidate PSCells that satisfy the change condition and have a number of beams greater than or equal to a threshold, and apply the configuration of the selected candidate PSCell. The above are merely examples of how the terminal device 103 selects a candidate PSCell, and the terminal device 103 may select a candidate PSCell in other manners, which are not limited herein.

It may be noted that, in the embodiments of the present disclosure, for any candidate PSCell among one or more candidate PSCells configured by any network device for the terminal, configuration information 1 of the candidate PSCell used when the terminal performs CPA and configuration information 2 of the candidate PSCell used when the terminal performs CPC may be collectively referred to as configuration information of the candidate PSCell, and configuration 1 of the candidate PSCell used when the terminal performs CPA and configuration 2 of the candidate PSCell used when the terminal CPC may be collectively referred to as configuration of the candidate PSCell. The configuration information of the candidate PSCell includes the configuration and the addition/change condition of the candidate PSCell. When the terminal performs CPA, the configuration of the candidate PSCell is used by the terminal to communicate with the candidate PSCell after the terminal adds the candidate PSCell, and the addition/change condition of the candidate PSCell includes the addition condition of the candidate PSCell, which is used by the terminal to determine whether to add the candidate PSCell. When the terminal performs CPC, the configuration of the candidate PSCell is used by the terminal to communicate with the candidate PSCell after the terminal device changes the source PSCell to the candidate PSCell. The addition/change condition of the candidate PSCell includes the change condition of the candidate PSCell, which is used by the terminal to determine whether to change the source PSCell to the candidate PSCell.

When the terminal device 103 has received the configuration and addition/change condition of one or more candidate PSCells but has not yet detected a PSCell that satisfies the addition/change condition, the terminal device 103 may switch from the current MN to a target MN with better signal quality. For example, the terminal device 103 may switch from the network device 101 to the network device 105. Typically, when the terminal device 103 performs MN switching, the current MN may release one or more candidate PSCells configured for the terminal device 103, and after the target MN establishes an RRC connection with the terminal device 103, the target MN may reconfigure one or more candidate PSCells for the terminal device 103 and transmit the configuration information of the one or more candidate PSCells configured for the terminal to the terminal device 103 for performing CPAC. The configuration information of the one or more candidate PSCells configured by the target MN for the terminal includes the configuration and the addition/change condition of the one or more candidate PSCells.

Typically, the configuration and addition/change condition of the candidate PSCell include a large amount of information. For example, the configuration of the candidate PSCell includes: an identifier (ID) of the configuration of the candidate PSCell; and/or random access resources allocated by the candidate PSCell for the terminal; and/or a cell radio network temporary identifier (CRNTI); and/or a cell global identification (CGI) of the candidate PSCell; and/or a physical cell identifier (PCI) of the candidate PSCell; and/or frequency information corresponding to the candidate PSCell. The frequency information corresponding to the candidate PSCell may include one or more of the following: an absolute frequency of a synchronization signal (SS)/physical broadcast channel (PBCH) block (SSB) (e.g., absoluteFrequency SSB), an absolute frequency position (e.g., absoluteFrequencyPointA) of a reference resource block (common RB0), a frequency band list (e.g., frequencyBandList), and a subcarrier spacing (SCS)-specific carrier list (e.g., scs-SpecificCarrierList). The configuration of the candidate PSCell further includes resource information corresponding to the candidate PSCell, which may include one or more of the following: a radio bearer configuration parameter (radioBearerConfig), a cell group configuration parameter (cellGroupConfig), a physical (PHY) layer configuration parameter, an MAC layer configuration parameter, an RLC layer configuration parameter, a PDCP configuration parameter, a service data adaptation protocol (SDAP) layer configuration parameter, or an RRC layer configuration parameter. The configuration of the candidate PSCell may also be referred to as a CPAC configuration or CPAC configuration information of the candidate PSCell, and the naming of such configuration is not specifically limited in the embodiments of the present disclosure.

The addition/change condition of the candidate PSCell is used by the terminal to determine whether the terminal needs to add the candidate PSCell or used by the terminal to determine whether to change the source PSCell to the candidate PSCell. For example, if the terminal detects that the candidate PSCell satisfies the addition/change condition of the candidate PSCell, the terminal determines to add the candidate PSCell or change the source PSCell to the candidate PSCell. If the terminal detects that the candidate PSCell does not satisfy the addition/change condition of the candidate PSCell, the terminal determines not to add the candidate PSCell or not to change the source PSCell to the candidate PSCell.

Optionally, the addition/change condition of the candidate PSCell includes an execution event type of the addition/change condition of the candidate PSCell, which may also be referred to as a measurement event or reporting event. The terminal may measure the signal quality of the candidate PSCell, or measure the signal quality of both the candidate PSCell and neighboring cells of the candidate PSCell, and determine whether to add the candidate PSCell or change the source PSCell to the candidate PSCell based on the measurement result and the execution event type.

Typically, before the terminal device performs the above-described CPAC procedure, the network device may provide a CPAC configuration to the terminal device. Accordingly, the terminal device performs PSCell change based on the CPAC configuration provided by the network device. In some implementations, the network device may determine whether the terminal device needs to perform CPAC based on service conditions (e.g., transmission latency, volume of data to be transmitted, etc.) and channel measurement conditions (e.g., channel state).

Additionally, in some implementations, the CPAC configuration may include a candidate cell configuration list, execution conditions, and cell configurations.

The above candidate cell list may be understood as a candidate cell configuration list used for CPA or CPC. The candidate cell list may contain cell information of one or more candidate cells. The cell information of each candidate cell may include a configuration information ID. It may be noted that, the configuration information ID may be determined based on the number of candidate cells configured by the network device for the terminal device. For example, if the network device provides five candidate cell configurations to the terminal device, then the configuration information IDs of the cells may be used to identify the five candidate cell configurations.

The above execution condition may refer to the execution condition that is used to instruct the terminal device to perform CPA or CPC.

The above cell configuration may refer to an SCG configuration provided by a candidate SN to an MN. In some implementations, the SCG configuration may be transmitted by the SN to the MN via an Xn interface and transparently forwarded by the MN to the terminal device. In an implementation, the SCG configuration may include a configuration of a candidate SCG, where the configuration of the candidate SCG may include a cell ID, a radio bearer configuration, a logical channel configuration, an RLC configuration, an MAC configuration, a PHY configuration, and an SCell configuration.

It may be noted that, as described above, an SCG may include one or more SCells, and accordingly, the SCG configuration may include one or more SCell configurations, and the embodiments of the present disclosure is not limited in this regard.

### Conditional handover (CHO)+CPAC procedure

Currently, some communication protocols (e.g., Rel-17) support including SCG configuration information in a CHO cell configuration to enable the terminal device to quickly establish DC. Since a CHO cell is preconfigured, which may cause unreasonable SCG cell configuration, resulting in SCG addition failure. Therefore, in other communication protocols (e.g., Rel-10), a scheme combining CHO and CPAC, also known as a "CHO+CPAC procedure", is introduced, that is, a CHO cell may be associated with at least one CPAC cell. In this way, the terminal device may select a corresponding SCG based on a condition and perform addition, which helps mitigate the issue of unreasonable SCG cell configuration.

### Selective activation of cell groups (SACG) procedure

Currently, in some communication protocols (e.g., Rel-16 and Rel-17), a CPAC scheme is introduced, that is, the network device can configure for the terminal device at least one candidate cell and condition information associated with the at least one candidate cell (hereinafter also referred to as "CAPC configuration"). Accordingly, upon reception of the configuration, the terminal device may continuously evaluate the configured candidate cell(s). If at least one candidate cell satisfies a condition, the terminal device triggers the CPAC procedure. Upon completion of the CPAC procedure, the terminal device may release all candidate cell configurations provided by the network device.

As such, the network device needs to configure a CPAC configuration for the terminal device each time before the terminal device executes the CAPC procedure, resulting in significantly increased signaling overhead for transmitting the CPAC configuration. In some cases, the CPAC configuration can be reused. Therefore, to avoid frequent reconfiguration of the CPAC configuration by the network device, enhancements to the CPAC procedure are introduced in other communication protocols (e.g., Rel-10), that is, upon completion of a CPA or CPC procedure, the terminal device may not release the candidate cell configuration (i.e., CPAC configuration) and continue evaluating candidate cells for a subsequent CPAC procedure. Thus, the SACG may also be referred to as a "continuous CAPC procedure."

### CHO reestablishment enhancement

In some communication protocols (e.g., Rel-16), a CHO procedure is introduced to improve handover robustness. Accordingly, the network device may preconfigure multiple sets of candidate cell configurations and condition information for the terminal device. Accordingly, the terminal device may evaluate candidate cells based on the condition information. If a handover condition is fulfilled, the terminal device performs handover based on the candidate cell configurations.

In some cases, if CHO fails, the terminal device may trigger a connection reestablishment procedure. During the reestablishment procedure, the terminal device may first perform cell reselection. After selecting a candidate CHO cell, the terminal device may re-execute the CHO procedure.

In some implementations, the above CHO reestablishment enhancement may be described in communication protocols as follows:
1> if *attemptCondReconfig* is configured; and
1> if the selected cell is not configured with *CondEventT1,* or the selected cell is configured with *CondEventT1* and leaving condition has not been fulfilled; and
1> if the selected cell is one of the candidate cells for which the *reconfiguration WithSync* is included in the masterCellGroup in the MCG *VarConditionalReconfig*:
   2> if the UE supports RLF-Report for conditional handover, set the *choCellId* in the *VarRLF-Report* to the global cell identity, if available, otherwise to the physical cell identity and carrier frequency of the selected cell;
   2> apply the stored *condRRCReconfig* associated to the selected cell and perform actions as specified in 5.3.5.3.

As stated above, in some scenarios, the network device may configure CPAC candidate cell configurations associated with multiple procedures for the terminal device, for example, configure at least two of a CPAC candidate cell configuration associated with the CHO+CPAC procedure (also referred to as a "first CPAC candidate cell configuration"), a CPAC candidate cell configuration associated with the CPAC procedure (also referred to as a "second CPAC candidate cell configuration"), and a CPAC candidate cell configuration associated with SACG (also referred to as a "third CPAC candidate cell configuration"). The terminal device may be unable to distinguish the procedures associated with the obtained CPAC candidate cell configurations, which may result in confusion among CPAC candidate cell configurations associated with multiple procedures.

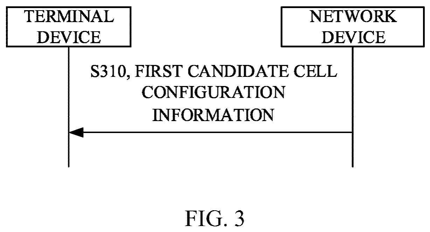

Therefore, embodiments of the present disclosure provide a method for wireless communication for distinguishing among CPAC candidate cell configurations associated with various procedures mentioned above. For ease of understanding, the method for wireless communication according to the embodiments of the present disclosure is described below in conjunction with FIG. 3. As illustrated in FIG. 3, the method includes step S310.

In step S310, a network device transmits first candidate cell configuration information to a terminal device.

In some implementations, the first candidate cell configuration information includes one or more of: a first CPAC candidate cell configuration associated with a first CHO cell configuration, a second CPAC candidate cell configuration, and a third CPAC candidate cell configuration associated with SACG. For ease of illustration below, at least two of the first CPAC candidate cell configuration, the second CPAC candidate cell configuration, and the third CPAC candidate cell configuration are collectively referred to as "multiple CPAC candidate cell configurations".

In the embodiments of the present disclosure, no specific naming limitation is imposed on the above CPAC candidate cell configurations. For example, the CPAC candidate cell configuration may further be referred to as an SCG configuration, a candidate cell configuration, or the like.

In the embodiments of the present disclosure, the first candidate cell configuration information may include one or more of a full configuration, a reference configuration, and a delta configuration. For example, the reference configuration may be configured by the network device for the terminal device. Of course, the reference configuration may also be a set of configurations sent by the serving network device and retained by the terminal device. The embodiments of the present disclosure are not limited in this regard.

In some implementations, the terminal device may determine a candidate cell configuration based on the reference configuration and the delta configuration. Certainly, the terminal device may determine the candidate cell configuration in other manners.

In order to distinguish among the multiple CPAC candidate cell configurations, in the embodiments of the present disclosure, the multiple CPAC candidate cell configurations are specified in terms of storage manner, transmission manner, validity time, and so on, which facilitates the terminal device in distinguishing among the multiple CPAC candidate cell configurations, which are respectively illustrated below in conjunction with Implementations 1 - 3.

It may be noted that, Implementations 1 - 3 of the embodiments of the present disclosure may be used in combination or separately, and the embodiments of the present disclosure are not limited in this regard.

Additionally, it may be further noted that, in the embodiments of the present disclosure, the multiple CPAC candidate cell configurations may be distinguished based on other manners. For example, the multiple CPAC candidate cell configurations may be distinguished based on terminal device-side implementation. For another example, it is possible to assist the terminal device in distinguishing among the multiple CPAC candidate cell configurations through network device-side implementation. The embodiments of the present disclosure are not limited in this regard.

In Implementation 1, transmission manners for at least two of the multiple CPAC candidate cell configurations are different. Accordingly, the terminal device may distinguish among the multiple CPAC candidate cell configurations based on different transmission manners.

In other words, transmission manners of at least two of the first CPAC candidate cell configuration, the second CPAC candidate cell configuration, and the third CPAC candidate cell configuration are different. For example, the transmission manner of the first CPAC candidate cell configuration may differ from that of the second CPAC candidate cell configuration. In another example, the transmission manner of the second CPAC candidate cell configuration may differ from that of the third CPAC candidate cell configuration. In yet another example, the transmission manner of the first CPAC candidate cell configuration may differ from that of the third CPAC candidate cell configuration. Of course, in the embodiments of the present disclosure, the transmission manners of the first CPAC candidate cell configuration, the second CPAC candidate cell configuration, and the third CPAC candidate cell configuration may different from one another.

In some implementations, the transmission manners being different as mentioned above may be understood as that information for transmitting the multiple CPAC candidate cell configurations may be different. Accordingly, the terminal device may distinguish among the multiple CPAC candidate cell configurations based on different information.

Suppose that information for transmitting the first CPAC candidate cell configuration is first information, information for transmitting the second CPAC candidate cell configuration is second information, and information for transmitting the third CPAC candidate cell configuration is third information. Then, the transmission manners being different as mentioned above may be understood as that at least two of the first information, the second information, and the third information are different.

It may be noted that, in the embodiments of the present disclosure, the first information, the second information, and third information may be understood as information independently transmitted. For example, the first information, the second information, and third information may correspond to different signaling.

In other implementations, the transmission manners being different as mentioned above may include that the information for transmitting the multiple CPAC candidate cell configurations may be different information elements (IEs). Accordingly, the terminal device may distinguish among the multiple CPAC candidate cell configurations based on different IEs (e.g., different IE names).

Suppose that the information for transmitting the first CPAC candidate cell configuration is the first information, the information for transmitting the second CPAC candidate cell configuration is the second information, and the information for transmitting the third CPAC candidate cell configuration is the third information. Then the transmission manners being different as mentioned above may be understood as that at least two of the first information, the second information, and the third information are different IEs.

It may be noted that, in the embodiments of the present disclosure, the IEs used to carry the multiple CPAC candidate cell configurations may be different IEs within the same signaling or different IEs in different signaling.

In yet other implementations, the transmission manners being different as mentioned above may include that the information for transmitting the multiple CPAC candidate cell configurations correspond to different information nested manners.

For example, the first CPAC candidate cell configuration may be delivered in a nested manner together with the first CHO cell configuration, that is, the first CPAC candidate cell configuration is nested within the first CHO cell configuration. Correspondingly, the second CPAC candidate cell configuration may be delivered in a non-nested manner. Therefore, in a case where the terminal device determines that a CPAC candidate cell configuration is nested within the first CHO cell configuration, the terminal device may determine that the CPAC candidate cell configuration is the first CPAC candidate cell configuration, i.e., may determine that the CPAC candidate cell configuration is associated with the CHO+CPAC procedure. In a case where the terminal device receives a CPAC candidate cell configuration delivered in a nested manner, the terminal device may determine that the CPAC candidate cell configuration is the second CPAC candidate cell configuration.

It may be noted that, in the embodiments of the present disclosure, the first CPAC candidate cell configuration may be delivered in a nested manner together with the first CHO cell configuration. Certainly, the first CPAC candidate cell configuration may be delivered in a parallel manner together with the first CHO cell configuration. For example, a configuration associated with the CHO+CPAC procedure may include the first CPAC candidate cell configuration and the first CHO cell configuration.

In still other implementations, the transmission manners being different as mentioned above may include indicating a procedure associated with a CPAC candidate cell configuration via indication information, in other words, indicating that a CPAC candidate cell configuration is one of the multiple CPAC candidate cell configurations via indication information.

For example, the first candidate cell configuration information may carry first indication information, where the first indication information indicates that the first candidate cell configuration information is one of the first CPAC candidate cell configuration, the second CPAC candidate cell configuration, and the third CPAC candidate cell configuration.

It may be noted that, in the embodiments of the present disclosure, the indication information may be transmitted together with a CPAC candidate cell configuration. For example, the first indication information may be transmitted together with the first CPAC candidate cell configuration. Certainly, in the embodiments of the present disclosure, the indication information and the CPAC candidate cell configuration may be transmitted separately.

Additionally, a configuration granularity of the indication information is not limited in the embodiments of the present disclosure. In some implementations, the configuration granularity of the indication information may be the entire candidate cell list. In this case, it may be understood that, the indication information indicates a procedure corresponding to a CPAC candidate cell configuration associated with the entire candidate cell list. In other implementations, the configuration granularity of the indication information may be a candidate cell group in the candidate cell list. For example, candidate cells in a first candidate cell group may be associated with the CHO+CPAC procedure, candidate cells in a second candidate cell group may be associated with the CPAC procedure, and candidate cells in a third candidate cell group may be associated with the SACG procedure. Accordingly, the configuration granularity of the indication information may be a candidate cell group. That is, the first candidate cell group corresponds to indication information 1 indicating the CHO+CPAC procedure, the second candidate cell group corresponds to indication information 2 indicating the CPAC procedure, and the third candidate cell group corresponds to indication information 3 indicating the SACG procedure. Of course, in the embodiments of the present disclosure, the configuration granularity of the indication information may also be that a respective candidate cell configuration corresponding to each candidate cell is indicated individually.

In Implementation 2, validity times of the multiple CPAC candidate cell configurations are different, in other words, the multiple CPAC candidate cell configurations do not become valid at the same time. Accordingly, since only one of the multiple CPAC candidate cell configurations becomes valid during a certain period of time, the terminal device does not need to distinguish among the multiple CPAC candidate cell configurations.

In other words, validity times of at least two of the first CPAC candidate cell configuration, the second CPAC candidate cell configuration, and the third CPAC candidate cell configuration are different. For example, the validity time of the first CPAC candidate cell configuration is different from that of the second CPAC candidate cell configuration. In another example, the validity time of the second CPAC candidate cell configuration is different from that of the third CPAC candidate cell configuration. In yet another example, the validity time of the first CPAC candidate cell configuration is different from that of the third CPAC candidate cell configuration. Of course, in the embodiments of the present disclosure, the validity times of the first CPAC candidate cell configuration, the second CPAC candidate cell configuration, and the third CPAC candidate cell configuration may be different from one another.

In other words, the procedures associated with the multiple CPAC candidate cell configurations do not become valid at the same time. In other words, at least two of the SACG procedure, the CAPC procedure, and the CHO+CPAC procedure do not become valid at the same time. In other words, the terminal device is not capable of supporting configuration of more than one procedure at the same time. In other words, the network device does not configure at least two procedures for the terminal device at the same time.

For example, the CAPC procedure and the SACG procedure are not configured at the same time. In this case, the second CAPC candidate cell configuration and the third CAPC candidate cell configuration do not become valid at the same time.

In another example, in a case where the terminal device is configured with the SACG procedure, then the CHO cell configuration cannot contain the first CAPC candidate cell configuration, that is, the terminal device does not support the CHO+CPAC procedure.

In yet another example, in a case where the terminal device is configured with the CAPC procedure, then the CHO cell configuration cannot contain the first CAPC candidate cell configuration, that is, the terminal device does not support the CHO+CPAC procedure.

In some implementations, it may be predefined, for example, predefined by a protocol, that at least two of the first CPAC candidate cell configuration, the second CPAC candidate cell configuration, and the third CPAC candidate cell configuration do not become valid at the same time.

Of course, in the embodiments of the present disclosure, the network device may further configure at least two of the above procedures for the terminal device, in other words, at least two of the above procedures may become valid at the same time. However, each procedure may be associated with a different candidate cell, that is, each candidate cell may support only one procedure. For example, the terminal device may be configured with both the first CPAC candidate cell configuration and the third CPAC candidate cell configuration, where the first CPAC candidate cell configuration may be associated with CPAC candidate cell 1, the third CPAC candidate cell configuration may be associated with CPAC candidate cell 2, and CPAC candidate cell 1 is different from CPAC candidate cell 2.

In Implementation 3, storage manners of at least two of the multiple CPAC candidate cell configurations are different. Accordingly, the terminal device can distinguish among the multiple CPAC candidate cell configurations based on different transmission manners.

In other words, the storage manners of at least two of the first CPAC candidate cell configuration, the second CPAC candidate cell configuration, and the third CPAC candidate cell configuration are different. For example, the storage manner of the first CPAC candidate cell configuration is different from that of the second CPAC candidate cell configuration. In another example, the storage manner of the second CPAC candidate cell configuration is different from that of the third CPAC candidate cell configuration. In yet another example, the storage manner of the first CPAC candidate cell configuration is different from that of the third CPAC candidate cell configuration. Of course, in the embodiments of the present disclosure, the storage manners of the first CPAC candidate cell configuration, the second CPAC candidate cell configuration, and the third CPAC candidate cell configuration may be different from one another.

In some implementations, the storage manners being different may include that the multiple CPAC candidate cell configurations are stored in different variables, respectively. The different variables may correspond to different variable names, for example.

Assume that a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable. Accordingly, at least two of the first variable, the second variable, and the third variable are different.

For example, the terminal device receives CPAC configuration information, where the CPAC configuration information is associated with the CAPC procedure. Accordingly, the terminal device stores a candidate cell configuration (i.e., the second CAPC candidate cell configuration) in the CPAC configuration information into the second variable, which is represented as *"VarConditionalReconfig".*

In a case where the terminal device supports the CHO+CPAC procedure, when the terminal device receives a CPAC configuration associated with the CHO+CPAC procedure, the terminal device also stores a CPAC candidate cell configuration (i.e., the first CAPC candidate cell configuration) in the CPAC configuration into the first variable.

In a case where the terminal device supports the SACG procedure, when the terminal device receives an SACG configuration, the terminal device may store a CPAC candidate cell configuration (i.e., the third CAPC candidate cell configuration) in the SACG configuration into the third variable.

In other implementations, at least two of the first variable, the second variable, and the third variable may be different partitions of the same variable.

For example, the second variable for storing the second CAPC candidate cell configuration may be represented as *"SCG VarConditionalReconfig",* and the third variable for storing the third CAPC candidate cell configuration may be represented as *"SACG VarConditionalReconfig",* where the second variable and the third variable may be understood as two categories of the variable *"VarConditionalReconfig".*

The foregoing describes the scheme for the terminal device to distinguish among the multiple CPAC candidate cell configurations in the embodiments of the present disclosure. The following describes a storage condition of the first CPAC candidate cell configuration, in other words, a storage method of the first CPAC candidate cell configuration.

In addition, in the embodiments of the present disclosure, the storage condition of the first CPAC candidate cell configuration may be used in combination with the above-described scheme for distinguishing among the multiple CPAC candidate cell configurations. Of course, the storage condition of the first CPAC candidate cell configuration may be used independently of the above-described scheme for distinguishing among the multiple CPAC candidate cell configurations.

For the first CPAC candidate cell configuration, in some implementations, the above-mentioned storage condition may include that the terminal device determines a first CHO cell associated with the first CHO cell configuration based on CHO.

That is, in a case where the first candidate cell configuration information includes the first CPAC candidate cell configuration, the method further includes the following. In a case where the terminal device determines the first CHO cell based on CHO (e.g., a handover condition in the first CHO cell configuration), the terminal device stores the first CPAC candidate cell configuration into the first variable.

In other implementations, the above-mentioned storage condition may further include that the terminal device determines the first CHO cell based on CHO, and the terminal device uses the first CHO cell configuration. Of course, in the embodiments of the present disclosure, the above-mentioned storage condition may further include that the terminal device performs CHO successfully based on the first CHO cell configuration. Of course, in the embodiments of the present disclosure, when the terminal device receives a CHO+CPAC configuration, the terminal device may immediately store the first CHO cell configuration and the first CPAC candidate cell configuration in the CHO+CPAC configuration.

It may be noted that, in the embodiments of the present disclosure, no specific limitation is imposed on the condition under which the terminal device uses the first CHO cell configuration. For example, the terminal device may use the first CHO cell configuration when a condition for the first CHO cell is fulfilled. In another example, the terminal device may use the first CHO cell configuration when the terminal device needs to use a candidate cell configuration of the first CHO cell. In yet another example, the terminal device may use the first CHO cell configuration when performing a reconfiguration procedure.

As described above, in some scenarios, the first CPAC candidate cell configuration may be nested in the first CHO cell configuration. Accordingly, when storing the first CPAC candidate cell configuration, the terminal device may first store the first CHO cell configuration in an associated variable (e.g., a fourth variable, represented as *"VarConditionalReconfig*"), and then store the first CPAC candidate cell configuration into the first variable. Of course, in the embodiments of the present disclosure, if the first CPAC candidate cell configuration is not nested in the first CHO cell configuration, the terminal device may also store the first CHO cell configuration and the first CPAC candidate cell configuration into different variables, respectively. The embodiments of the present disclosure are not limited in this regard.

For ease of understanding, the following describes schemes which combine storage conditions and storage manners in conjunction with examples 1 to 3 in the embodiments of the present disclosure. It may be noted that, examples 1 to 3 are described by taking the case where the first CHO cell configuration contains the first CPAC candidate cell configuration as an example. Examples 1 to 3 are also applicable to scenarios where the first CHO cell configuration and the first CPAC candidate cell configuration are transmitted in a non-nested manner. The embodiments of the present disclosure are not limited in this regard.

Example 1: Assume that the terminal device supports the CHO+CPAC procedure. The network device may transmit the first CHO cell configuration to the terminal device, where the first CHO cell configuration contains the first CPAC candidate cell configuration. Accordingly, the terminal device may store the first CHO cell configuration into the variable *"VarConditionalReconfig".* If the terminal device determines the first CHO cell based on the condition and applies the first CHO cell configuration information, the terminal device may write the first CPAC candidate cell configuration, which is nested in the first CHO cell configuration, into the first variable.

Example 2: Assume that the terminal device supports the CHO+CPAC procedure. The network device may transmit the first CHO cell configuration to the terminal device, where the first CHO cell configuration contains the first CPAC candidate cell configuration. If CHO is successful, the terminal device may perform reconfiguration based on the condition in the first CHO cell configuration and store the first CPAC candidate cell configuration carried in the first CHO cell configuration into the variable for SCG storage, represented as *"VarConditionalReconfig for SCG".*

Example 3: Assume that the terminal device supports the CHO+CPAC procedure. The network device may transmit the first CHO cell configuration to the terminal device, where the first CHO cell configuration contains the first CPAC candidate cell configuration. If the execution condition of CHO for the first CHO cell is fulfilled, the terminal device may store the first CPAC candidate cell configuration carried in the first CHO cell configuration into the variable for SCG storage, represented as *"VarConditionalReconfig for SCG".*

The foregoing describes the storage conditions of the first CPAC candidate cell configuration. The following will describe release conditions of the multiple CPAC candidate cell configurations in the embodiments of the present disclosure. For ease of understanding, the following describes the release conditions of the multiple CPAC candidate cell configurations in conjunction with scenarios 1 to 3, respectively.

### Scenario 1: Release condition of the first CPAC candidate cell configuration

Based on specifications in existing protocols, if the terminal device successfully performs CHO, the terminal device will release all conditional reconfiguration variables, including an MCG configuration stored in a variable *"MCG VarConditionalReconfig"* and an SCG configuration stored in a variable *"SCG VarConditionalReconfig".* In other words, a CPAC configuration associated with a CHO cell may also be released. However, in such cases, the terminal device often still needs to continue performing conditional evaluation for SCG. If the CPAC configuration associated with the CHO cell is released, the terminal device will not be able to perform SCG addition or change based on the CPAC configuration.

Therefore, in the embodiments of the present disclosure, if the terminal device accesses the first CHO cell, the terminal device releases other cell configurations except the first CPAC candidate cell configuration.

In some implementations, the terminal device accessing the first CHO cell may include, for example, the terminal device successfully performing random access to the first CHO cell.

It may be noted that, in the embodiments of the present disclosure, the other cell configurations may include one or more of: the first CHO cell configuration (e.g., the MCG-associated configuration), the second CPAC candidate cell configuration, and the third CPAC candidate cell configuration. Of course, in the embodiments of the present disclosure, the other cell configurations may further include candidate cell configurations that have been executed or applied.

For ease of understanding, the following describes the release condition of the first CPAC candidate cell configuration in the embodiments of the present disclosure by using, as an example, a reconfiguration with synchronization (represented as *"reconfigurationWithSync"*) included in the first CPAC candidate cell configuration, in combination with the description manners in communication protocols:
1> if *reconfigurationWithSync* was included in *spCellConfig* of an MCG or SCG and when MAC of an NR cell group successfully completes a Random Access procedure triggered above;
   2> if the *reconfigurationWithSync* included in *spCellConfig* of an MCG was not configured for CHO+CPAC procedure;
   2> if the *reconfigurationWithSync* was included in *spCellConfig* of an SCG and the CPA or CPC was not configured for CHO+CPAC procedure:
      3> remove the entries within the *spCellConfig* of an MCG or SCG except the entries for CHO+CPAC procedure, if any;
      3> remove all the entries within *VarConditionalReconfiguration* as specified in TS 36.331 [10], clause 5.3.5.9.6, if any

In other scenarios, when the terminal device successfully performs CHO to the first CHO cell, the terminal device may also release the first CPAC candidate cell configuration. For example, when the terminal device has completed the CHO and CPAC procedure associated with the first CPAC candidate cell configuration, the terminal device may no longer need to use the first CPAC candidate cell configuration, and thus may release the first CPAC candidate cell configuration to save storage space. In another example, when the terminal device releases the SCG associated with the first CPAC candidate cell configuration, the terminal device may also release the first CPAC candidate cell configuration.

It may be noted that, upon successful execution of CHO to the first CHO cell, the terminal device may also release other CHO cell configurations and CPAC candidate cell configurations associated with those other CHO cell configurations. The embodiments of the present disclosure are not limited in this regard.

The foregoing describes the release conditions of the first CPAC candidate cell configuration when the terminal device successfully performs CHO to the first CHO cell in the embodiments of the present disclosure. The following will describe the release conditions of the first CPAC candidate cell configuration when CHO to the first CHO cell by the terminal device fails in the embodiments of the present disclosure.

In some scenarios, the terminal device may trigger an RRC connection reestablishment after CHO failure. Based on specifications in existing protocols, if the terminal device reselects a CHO cell, the terminal device will not release contents in the variable *VarConditionalReconfig.* However, in practice, once CHO is successful, the terminal device only needs to evaluate a CPAC candidate cell associated with a CHO cell for which CHO is successful. As for a first CPAC candidate cell configuration associated with the first CHO cell for which CHO has failed, even the first CPAC candidate cell configuration is stored in the variable *VarConditionalReconfig,* the terminal device will no longer use the first CPAC candidate cell configuration, leading to a waste of storage space.

Therefore, to save storage space, in the embodiments of the present disclosure, when CHO for the first CHO cell by the terminal device fails, the terminal device may clear the first CPAC candidate cell configuration associated with the first CHO cell configuration. In other words, upon successful CHO, the terminal device may clear a CPAC candidate cell configuration(s) associated with a CHO cell(s) for which CHO has failed, i.e., clear the variable *"VarConditionalReconfig for SCG"* which is used to store the CPAC candidate cell configuration(s) associated with the cells for which CHO by the terminal device has failed.

For example, the first candidate cell configuration information includes the first CPAC candidate cell configuration. The above method further includes the following. If a first condition is fulfilled, the terminal device releases the first CPAC candidate cell configuration.

In some implementations, the first condition includes one or more of the following: the terminal device enters an idle state; the terminal device enters an inactive state; a timer T304 of the terminal device expires; the terminal device receives an RRC release message; CHO for the first CHO cell by the terminal device fails; and during running of a timer T311, the terminal device selects another cell other than the first CHO cell.

For example, the first condition includes that the terminal device enters an idle state. The terminal device enters an idle state, which may be understood as that CHO for the first CHO cell by the terminal device fails, and the terminal device may release the first CPAC candidate cell configuration.

For example, the first condition includes that the terminal device enters an inactive state. The terminal device enters an inactive state, which may be understood as that CHO for the first CHO cell by the terminal device fails, and the terminal device may release the first CPAC candidate cell configuration.

For example, the first condition includes that the timer T304 of the terminal device expires. When the timer T304 expires, it indicates that a handover in LTE frequency division duplex (FDD) by the terminal device fails, and accordingly the terminal device may release the first CPAC candidate cell configuration.

For example, the first condition includes the terminal device receives an RRC release message. Upon reception of an RRC release message sent by the network device, the terminal device may release the first CPAC candidate cell configuration.

For example, the first condition includes that CHO for the first CHO cell by the terminal device fails. When CHO for the first CHO cell by the terminal device fails, the terminal device may release the first CPAC candidate cell configuration.

For example, the first condition includes that the terminal device selects another cell other than the first CHO cell during running of the timer T311. Generally, the terminal device may start the timer T311 upon initiating RRC connection reestablishment. Accordingly, when the terminal device selects a suitable cell (e.g., an E-UTRAN cell or inter-RAT cell), the terminal device may stop the timer T311.

Therefore, selecting another cell other than the first CHO cell during running of the timer T311 indicates that the terminal device has found another cell suitable for access, where the first CHO cell may be understood as a cell for which CHO by the terminal device fails. In this case, the terminal device may release the first CPAC candidate cell configuration.

### Scenario 2: Release condition of the third CPAC candidate cell configuration

Currently, in specifications of existing communication protocols, upon reception of a candidate cell configuration for the SACG procedure, i.e., the third CPAC candidate cell configuration, the terminal device may store the third CPAC candidate cell configuration into a variable. Further, when the terminal device successfully performs CPA or CPC, the terminal device may immediately release the third CPAC candidate cell configuration.

However, since the SACG procedure is a continuous CPAC procedure, in other words, even if the terminal device successfully performs CPA or CPC based on the third CPAC candidate cell configuration, the terminal device is still required to continue performing a next round of CPA or CPC based on the third CPAC candidate cell configuration. The release scheme for the third CPAC candidate cell configuration defined in the current communication protocols may prevent the terminal device from performing a next round of CPA or CPC.

Therefore, the embodiments of the present disclosure provide a scheme for releasing candidate cell configurations. When the terminal device successfully performs CPA or CPC based on the third CPAC candidate cell configuration, the terminal device releases other cell configurations except the third CPAC candidate cell configuration.

It may be noted that, the other cell configurations may include one or more of the first CHO cell configuration (e.g., MCG-associated configuration), the second CPAC candidate cell configuration, and the third CPAC candidate cell configuration. Of course, in the embodiments of the present disclosure, the other cell configurations may also include candidate cell configurations that have been executed or applied.

For ease of understanding, the following describes the release condition of the third CPAC candidate cell configuration in the embodiments of the present disclosure by using, as an example, a reconfiguration with synchronization (represented as *"reconfigurationWithSync"*) included in the third CPAC candidate cell configuration, in combination with the description manners in communication protocols:
1> if *reconfigurationWithSync* was included in *spCellConfig* of an MCG or SCG and when MAC of an NR cell group successfully completes a Random Access procedure triggered above;
   2> if the *reconfigurationWithSync* was included in *spCellConfig* of an MCG;
   2> if the *reconfigurationWithSync* was included in *spCellConfig* of an SCG and the CPA or CPC was not configured for SACG procedure:
      3> remove the entries within *spCellConfig* of an MCG or SCG except the entries for SACG procedure, if any;
      3> remove all the entries within *VarConditionalReconfiguration* as specified in TS 36.331 [10], clause 5.3.5.9.6, if any.

### Scenario 3: Release conditions for the case where the first CPAC candidate cell configuration, the second CPAC candidate cell configuration, and the third CPAC candidate cell configuration are all configured according to the embodiments of the present disclosure

When the network device configures the CHO+CPAC procedure for the terminal device, the terminal device, upon reception of a CHO+CPAC configuration, may store configurations of candidate cells (including CHO cells and CPAC) into a variable denoted as *"VarConditionalReconfig".* If the network device further configures the CPAC procedure or the SACG procedure for the terminal device, candidate cell configurations associated with the CPAC procedure and the SACG procedure may also be stored into the variable *"VarConditionalReconfig".* When the terminal device attempts CHO access but fails, and triggers a reestablishment procedure and selects a CHO cell (for example, the first CHO cell), based on specifications in existing protocols, the terminal device may release the configurations of an MCG and SCG stored in the variable *"VarConditionalReconfig".*

During the CHO+CPAC procedure, the terminal device continues to perform the CPAC procedure associated with the first CHO cell, i.e., the terminal device still needs to perform the CPAC procedure based on the first CPAC candidate cell configuration. The release scheme defined in existing protocols may result in that the terminal device cannot perform the CPAC procedure based on the first CPAC candidate cell configuration.

During the SACG procedure, the terminal device also needs to continue to perform the SACG procedure based on the third CPAC candidate cell configuration. Based on the release scheme defined in existing protocols, the terminal device also releases the third CPAC candidate cell configuration, resulting in that the terminal device cannot perform the SACG procedure based on the third CPAC candidate cell configuration.

Therefore, to address the above issues, the embodiments of the present disclosure provide a release scheme. The method further includes the following. When the terminal device accesses the first CHO cell, the terminal device releases other cell configurations except the first CPAC candidate cell configuration and the third CPAC candidate cell configuration.

It may be noted that, the other cell configurations may include the first CHO cell configuration (for example, MCG-associated configuration) and/or the second CPAC candidate cell configuration. Of course, in the embodiments of present disclosure, the other cell configurations may also include candidate cell configurations that have been executed and/or applied.

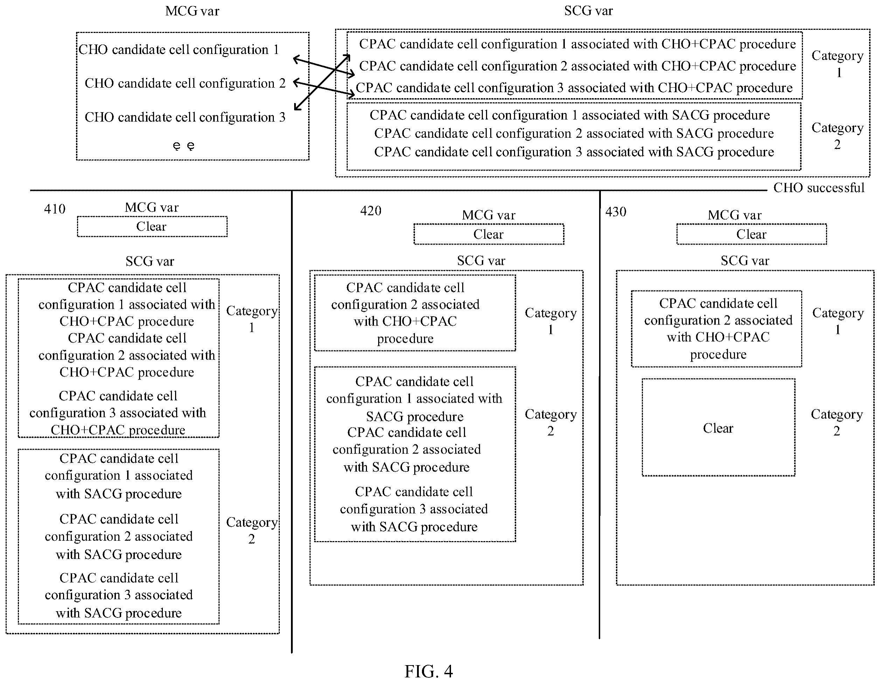

For ease of understanding, the release scheme provided by the embodiments of the present disclosure is described below with reference to FIG. 4. As illustrated in FIG. 4, variables in the terminal device include MCG variable *"MCG var"* and SCG variable *"SCG var".* CHO candidate cell configurations 1 to 3 associated with the CHO+CPAC procedure are stored in MCG variable *"MCG var".* SCG variable *"SCG var"* may include two categories: category 1 and category 2. Category 1 is used to store CPAC candidate cell configurations 1 to 3 associated with the CHO+CPAC procedure. Category 2 is used to store CPAC candidate cell configurations 1 to 3 associated with the SACG procedure. CHO candidate cell configuration 1 of CHO cell 1 is associated with CPAC candidate cell configuration 2. CHO candidate cell configuration 2 of CHO cell 2 is associated with CPAC candidate cell configuration 3. CHO candidate cell configuration 3 of CHO cell 3 is associated with CPAC candidate cell configuration 1.

In some implementations, referring to 410, after the terminal device successfully performs CHO to CHO cell 1, the terminal device may clear CHO candidate cell configurations 1 to 3 in variable *"MCG var",* and retain CPAC candidate cell configurations 1 to 3 associated with the CHO+CPAC procedure and CPAC candidate cell configurations 1 to 3 associated with the SACG procedure stored in variable *"SCG var".*

In other implementations, referring to 420, after the terminal device successfully performs CHO to CHO cell 1, the terminal device may clear CHO candidate cell configurations 1 to 3 in variable *"MCG var",* and retain CPAC candidate cell configuration 2 stored in category 1 and retain all CPAC candidate cell configurations 1 to 3 associated with the SACG procedure stored in category 2.

In other implementations, referring to 430, after the terminal device successfully performs CHO to CHO cell 1, the terminal device may clear CHO candidate cell configurations 1 to 3 in variable *"MCG var"* and all CPAC candidate cell configurations 1 to 3 associated with the SACG procedure stored in category 2, and retain only CPAC candidate cell configuration 2 stored in category 1.

For ease of understanding, the following describes the release condition of the third CPAC candidate cell configuration in the embodiments of the present disclosure by using, as an example, a reconfiguration with synchronization (represented as *"reconfigurationWithSync"*) included in the third CPAC candidate cell configuration, in combination with description manners in communication protocols.

The terminal device shall perform the following actions upon reception of the RRC reconfiguration message, or upon execution of the conditional reconfiguration (CHO, CPA, or CPC):
1> if the *RRCReconfiguration* is applied due to a conditional reconfiguration execution upon cell selection performed while timer T311 was running, as defined in 5.3.7.3:
   2> remove the entries within the MCG and the SCG *VarConditionalReconfig* except the entries for SACG or CHO+CPAC procedure, if any

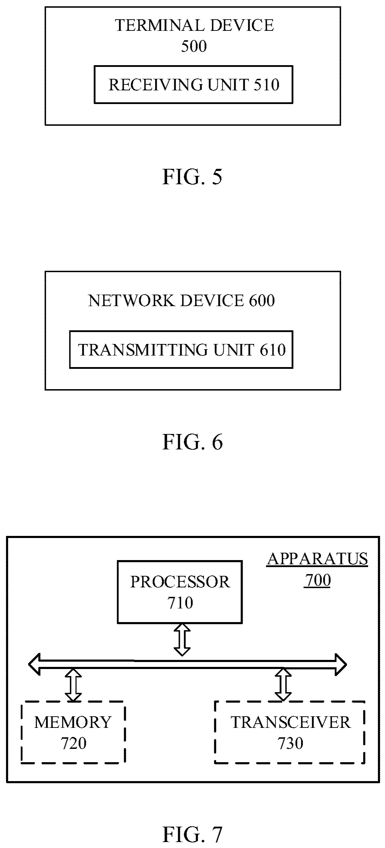

The method embodiments of the present disclosure have been described in detail above with reference to FIGs. 1 to 4. Below, the apparatus embodiments of the present disclosure will be described in detail with reference to FIGs. 5 to 7. It may be understood that, the illustrations of the method embodiments correspond to those of the apparatus embodiments, and therefore, for parts not described in detail, reference may be made to the foregoing method embodiments.

FIG. 5 is a schematic diagram of a terminal device according to embodiments of the present disclosure. A terminal device 500 as illustrated in FIG. 5 includes a receiving unit 510 configured to receive first candidate cell configuration information transmitted by a network device, where the first candidate cell configuration information includes one or more of the following: a first CPAC candidate cell configuration associated with a first CHO cell configuration; a second CPAC candidate cell configuration; and a third CPAC candidate cell configuration associated with SACG. Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In some embodiments, information for transmitting the first CPAC candidate cell configuration is first information, information for transmitting the second CPAC candidate cell configuration is second information, and information for transmitting the third CPAC candidate cell configuration is third information. The transmission manners of at least two of the first CPAC candidate cell configuration, the second CPAC candidate cell configuration, and the third CPAC candidate cell configuration being different includes one or more of the following: at least two of the first information, the second information, and the third information are different; at least two of the first information, the second information, and the third information are different IEs within same information; at least two of the first information, the second information, and the third information correspond to different information nested manners.

In some embodiments, the first candidate cell configuration information carries first indication information, where the first indication information indicates that the first candidate cell configuration information is one of the first CPAC candidate cell configuration, the second CPAC candidate cell configuration, and the third CPAC candidate cell configuration.

In some embodiments, the validity times of at least two of the first CPAC candidate cell configuration, the second CPAC candidate cell configuration, and the third CPAC candidate cell configuration being different includes that: at least two of the first CPAC candidate cell configuration, the second CPAC candidate cell configuration, and the third CPAC candidate cell configuration do not become valid at the same time as predefined by a protocol.

In some embodiments, a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable. The storage manners of at least two of the first CPAC candidate cell configuration, the second CPAC candidate cell configuration, and the third CPAC candidate cell configuration being different includes that: at least two of the first variable, the second variable, and the third variable are different; and/or at least two of the first variable, the second variable, and the third variable are different partitions of a same variable.

In some embodiments, the first CHO cell configuration corresponds to a first CHO cell, and in a case where the first candidate cell configuration information includes the first CPAC candidate cell configuration, the terminal device further includes a first processing unit configured to store the first CPAC candidate cell configuration into the first variable in a case where the terminal device determines the first CHO cell based on CHO.

In some embodiments, the terminal device further includes a second processing unit configured to release other cell configurations except the first CPAC candidate cell configuration in a case where the terminal device accesses the first CHO cell.

In some embodiments, in a case where the first candidate cell configuration information includes the first CPAC candidate cell configuration, the terminal device further includes a third processing unit configured to release the first CPAC candidate cell configuration in a case where a first condition is fulfilled, wherein the first condition includes one or more of the following: the terminal device enters an idle state; the terminal device enters an inactive state; a timer T304 of the terminal device expires; the terminal device receives an RRC release message; CHO for the first CHO cell by the terminal device fails; the terminal device completes a CHO and CPAC procedure associated with the first CPAC candidate cell configuration; and the terminal device selects another cell other than the first CHO cell during running of a timer T311.

In some embodiments, in a case where the first candidate cell configuration information includes the third CPAC candidate cell configuration, the terminal device further includes a fourth processing unit configured to release other cell configurations except the third CPAC candidate cell configuration in a case where the terminal device successfully performs CPA or CPC based on the third CPAC candidate cell configuration.

In some embodiments, in a case where the first candidate cell configuration information includes both the first CPAC candidate cell configuration and the third CPAC candidate cell configuration, the terminal device further includes a fifth processing unit configured to release other cell configurations except the first CPAC candidate cell configuration and the third CPAC candidate cell configuration in a case where the terminal device accesses the first CHO cell.

In some embodiments, the other cell configurations include one or more of the first CHO cell configuration, the second CPAC candidate cell configuration, and the third CPAC candidate cell configuration.

FIG. 6 is a schematic diagram of a network device according to embodiments of the present disclosure. A network device 600 as illustrated in FIG. 6 includes a transmitting unit 610. The transmitting unit is configured to transmit first candidate cell configuration information to a terminal device, where the first candidate cell configuration information includes one or more of the following: a first CPAC candidate cell configuration associated with a first CHO cell configuration; a second CPAC candidate cell configuration; and a third CPAC candidate cell configuration associated with SACG. Storage manners of at least two of the first CPAC candidate cell configuration, the second CPAC candidate cell configuration, and the third CPAC candidate cell configuration are different; and/or transmission manners of at least two of the first CPAC candidate cell configuration, the second CPAC candidate cell configuration, and the third CPAC candidate cell configuration are different; and/or validity times of at least two of the first CPAC candidate cell configuration, the second CPAC candidate cell configuration, and the third CPAC candidate cell configuration are different.

In some embodiments, information for transmitting the first CPAC candidate cell configuration is first information, information for transmitting the second CPAC candidate cell configuration is second information, and information for transmitting the third CPAC candidate cell configuration is third information. The transmission manners of at least two of the first CPAC candidate cell configuration, the second CPAC candidate cell configuration, and the third CPAC candidate cell configuration being different includes one or more of the following: at least two of the first information, the second information, and the third information are different; at least two of the first information, the second information, and the third information are different information elements (IEs) within same information; and at least two of the first information, the second information, and the third information correspond to different information nested manners.

In some embodiments, the first candidate cell configuration information carries first indication information, where the first indication information indicates that the first candidate cell configuration information is one of the first CPAC candidate cell configuration, the second CPAC candidate cell configuration, and the third CPAC candidate cell configuration.

In some embodiments, the validity times of at least two of the first CPAC candidate cell configuration, the second CPAC candidate cell configuration, and the third CPAC candidate cell configuration being different includes that: at least two of the first CPAC candidate cell configuration, the second CPAC candidate cell configuration, and the third CPAC candidate cell configuration do not become valid at the same time as predefined by a protocol.

In some embodiments, a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable. The storage manners of at least two of the first CPAC candidate cell configuration, the second CPAC candidate cell configuration, and the third CPAC candidate cell configuration being different includes that: at least two of the first variable, the second variable, and the third variable are different; and/or at least two of the first variable, the second variable, and the third variable are different partitions of a same variable.

In some embodiments, the first CHO cell configuration corresponds to a first CHO cell, and the first candidate cell configuration information includes the first CPAC candidate cell configuration, and in a case where the terminal device accesses the first CHO cell, other cell configurations except the first CPAC candidate cell configuration are released.

In some embodiments, in a case where the first candidate cell configuration information includes the first CPAC candidate cell configuration, the first CPAC candidate cell configuration is released by the terminal device in a case where a first condition is fulfilled, where the first condition includes one or more of the following: the terminal device enters an idle state; the terminal device enters an inactive state; a timer T304 of the terminal device expires; the terminal device receives a RRC release message; CHO for the first CHO cell by the terminal device fails; the terminal device completes a CHO and CPAC procedure associated with the first CPAC candidate cell configuration; and the terminal device selects another cell other than the first CHO cell during running of a timer T311.

In some embodiments, the first candidate cell configuration information includes the third CPAC candidate cell configuration, and other cell configurations except the third CPAC candidate cell configuration are released in a case where the terminal device successfully performs CPA or CPC based on the third CPAC candidate cell configuration.

In some embodiments, the first candidate cell configuration information includes both the first CPAC candidate cell configuration and the third CPAC candidate cell configuration, and other cell configurations except the first CPAC candidate cell configuration and the third CPAC candidate cell configuration are released in a case where the terminal device accesses the first CHO cell.

In some embodiments, the other cell configurations include one or more of the first CHO cell configuration, the second CPAC candidate cell configuration, and the third CPAC candidate cell configuration.

In optional embodiments, the receiving unit 510 may be implemented as a transceiver 730. The terminal device 500 may further include a processor 710 and a memory 720, as illustrated in FIG. 7.

In optional embodiments, the transmitting unit 610 may be implemented as a transceiver 730. The network device 600 may further include a processor 710 and a memory 720, as illustrated in FIG. 7.

FIG. 7 is a schematic structural diagram of a communication apparatus according to the embodiments of the present disclosure. In FIG. 7, dashed boxes indicate that the corresponding units or modules are optional. The apparatus 700 may be configured to implement the methods described in the method embodiments above. The apparatus 700 may be a chip, a terminal device, or a network device.

The apparatus 700 may include one or more processors 710. The processor 710 may be configured to support the apparatus 700 to execute the methods described in the foregoing method embodiments. The processor 710 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA), or other programmable logic device, a discrete gate or transistor logic device, a discrete hardware component, or the like. A general-purpose processor may be a microprocessor, or any other conventional processor.

The apparatus 700 may further include one or more memories 720. The memory 720 stores o programs which, when executed by the processor 710, cause the processor 710 to perform the methods described in the method embodiments. The memory 720 may be independent from the processor 710 or integrated with the processor 710.

The apparatus 700 may also include a transceiver 730. The processor 710 may communicate with other devices or chips via the transceiver 730. For example, the processor 710 may transmit data to and receive data from other devices or chips through the transceiver 730.

The embodiments of the present disclosure further provide a computer-readable storage medium for storing a program. The computer-readable storage medium may be applied to a terminal or network device provided in the embodiments of the present disclosure, and the program enables the computer to execute the methods performed by the terminal device or network device in various embodiments of the present disclosure.

The embodiments of the present disclosure further provide a computer program product. The computer program product includes a program, and may be applied to a terminal or network device provided in the present disclosure. The program enables the computer to execute the methods performed by the terminal device or network device in various embodiments of the present disclosure.

The embodiments of the present disclosure further provide a computer program, which may be applied to a terminal or network device provided in the present disclosure. The computer program causes a computer to execute the methods performed by the terminal device or network device in various embodiments of the present disclosure.

It may be understood that, the terms "system" and "network" used in the present disclosure may be used interchangeably. In addition, the terms used in the present disclosure is for the purpose of describing specific embodiments only and is not intended to limit the scope of the present disclosure. The terms "first", "second", "third", "fourth" and the like in the description, claims, and the accompanying drawings of the present disclosure are used to distinguish different objects and are not intended to indicate a specific sequence. In addition, the terms "include", "comprise", and "have" as well as variations thereof are intended to cover non-exclusive inclusion.

"Indication" referred to in the embodiments of the present disclosure may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, *A* indicates C, and *B* can be obtained according to C; or may mean that that there is an association relationship between A and *B.*

In the embodiments of the present disclosure, *"B* corresponding to *A"* means that *B* is associated with *A* and can be determined based on *A.* It may also be understood that, determining *B* based on *A* does not mean that *B* is determined solely based on *A,* and also can be determined based on *A* and/or other information.

In the embodiments of the present disclosure, the term "correspondence" or "corresponding" may mean that there is a direct or indirect correspondence between the two, may mean that there is an association between the two, or may mean a relationship of indicating and indicated or configuring and configured, etc.

In the embodiments of the present disclosure, the "pre-defined" or "pre-configured" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In the embodiments of the present disclosure, the "protocol" may refer to a communication standard protocol, which may include, for example, an LTE protocol, an NR protocol, and a protocol applied to a future communication system, and the present disclosure is not limited in this regard.

The term "and/or" in the embodiments of the present disclosure only describes an association relationship between associated objects, which means that there may be three relationships. For example, *A* and/or *B* can mean *A* alone, both *A* and *B* exist, and *B* alone. In addition, the character "/" herein generally indicates that the associated objects are in an "or" relationship.

In various embodiments of the present disclosure, the magnitude of a sequence number of each of the foregoing processes does not imply an execution order, and the execution order between the processes should be determined according to processes and internal logic thereof, which shall not constitute any limitation to the implementation of embodiments of the present disclosure.

It may be appreciated that, the systems, devices, apparatuses, and methods disclosed in various embodiments of the present disclosure may also be implemented in various other manners. For example, the above apparatus implementations are merely illustrative, e.g., the division of units is only a division of logical functions, and other manners of division may be available in practice, e.g., multiple units or components may be combined or may be integrated into another system, or some features may be ignored or skipped. In other respects, the coupling or direct coupling or communication connection as illustrated or discussed may be an indirect coupling or communication connection through some interfaces or modules, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some of the procedures of the embodiments of the present disclosure are generated. The computer may be a general-purpose computer, a special-purpose computer, a computer network, or other programmable apparatuses. The computer instruction may be stored in a computer-readable storage medium, or transmitted from one computer-readable storage medium to another computer-readable storage medium. For example, the computer instruction may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer accessible usable-medium or a data storage device such as a server, a data center, or the like which integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely embodiments of the present disclosure, but are not intended to limit the protection scope of the disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving, by a terminal device, first candidate cell configuration information transmitted by a network device, wherein the first candidate cell configuration information comprises one or more of the following: a first conditional primary secondary cell (PSCell) addition/change (CPAC) candidate cell configuration associated with a first conditional handover (CHO) cell configuration; a second CPAC candidate cell configuration; and a third CPAC candidate cell configuration associated with selective activation of cell groups (SACG);
wherein storage manners of at least two of the first CPAC candidate cell configuration, the second CPAC candidate cell configuration, and the third CPAC candidate cell configuration are different; and/or
transmission manners of at least two of the first CPAC candidate cell configuration, the second CPAC candidate cell configuration, and the third CPAC candidate cell configuration are different; and/or
validity times of at least two of the first CPAC candidate cell configuration, the second CPAC candidate cell configuration, and the third CPAC candidate cell configuration are different.

2. The method according to claim 1, wherein information for transmitting the first CPAC candidate cell configuration is first information, information for transmitting the second CPAC candidate cell configuration is second information, and information for transmitting the third CPAC candidate cell configuration is third information,
wherein the transmission manners of at least two of the first CPAC candidate cell configuration, the second CPAC candidate cell configuration, and the third CPAC candidate cell configuration being different comprises one or more of the following:
at least two of the first information, the second information, and the third information are different;
at least two of the first information, the second information, and the third information are different information elements (IEs) within same information; and
at least two of the first information, the second information, and the third information correspond to different information nested manners.

3. The method according to claim 1 or 2, wherein the first candidate cell configuration information carries first indication information, wherein the first indication information indicates that the first candidate cell configuration information is one of the first CPAC candidate cell configuration, the second CPAC candidate cell configuration, and the third CPAC candidate cell configuration.

4. The method according to any one of claims 1 to 3, wherein the validity times of at least two of the first CPAC candidate cell configuration, the second CPAC candidate cell configuration, and the third CPAC candidate cell configuration being different comprises that: at least two of the first CPAC candidate cell configuration, the second CPAC candidate cell configuration, and the third CPAC candidate cell configuration do not become valid at the same time as predefined by a protocol.

5. The method according to any one of claims 1 to 4, wherein a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable,
wherein the storage manners of at least two of the first CPAC candidate cell configuration, the second CPAC candidate cell configuration, and the third CPAC candidate cell configuration being different comprises:
at least two of the first variable, the second variable, and the third variable being different; and/or
at least two of the first variable, the second variable, and the third variable being different partitions of a same variable.

6. The method according to claim 5, wherein the first CHO cell configuration corresponds to a first CHO cell, and in a case where the first candidate cell configuration information comprises the first CPAC candidate cell configuration, the method further comprises:
storing, by the terminal device, the first CPAC candidate cell configuration into the first variable in a case where the terminal device determines the first CHO cell based on CHO.

7. The method according to claim 6, further comprising:
releasing, by the terminal device, other cell configurations except the first CPAC candidate cell configuration in a case where the terminal device accesses the first CHO cell.

8. The method according to claim 5, wherein in a case where the first candidate cell configuration information comprises the first CPAC candidate cell configuration, the method further comprises:
releasing, by the terminal device, the first CPAC candidate cell configuration in a case where a first condition is fulfilled, wherein the first condition comprises one or more of the following:
the terminal device enters an idle state;
the terminal device enters an inactive state;
a timer T304 of the terminal device expires;
the terminal device receives a radio resource control (RRC) release message;
CHO for a first CHO cell by the terminal device fails;
the terminal device completes a CHO and CPAC procedure associated with the first CPAC candidate cell configuration; and
the terminal device selects another cell other than the first CHO cell during running of a timer T311.

9. The method according to claim 5, wherein in a case where the first candidate cell configuration information comprises the third CPAC candidate cell configuration, the method further comprises:
releasing, by the terminal device, other cell configurations except the third CPAC candidate cell configuration in a case where the terminal device successfully performs conditional PSCell addition (CPA) or conditional PSCell change (CPC) based on the third CPAC candidate cell configuration.

10. The method according to claim 5, wherein in a case where the first candidate cell configuration information comprises both the first CPAC candidate cell configuration and the third CPAC candidate cell configuration, the method further comprises:
releasing, by the terminal device, other cell configurations except the first CPAC candidate cell configuration and the third CPAC candidate cell configuration in a case where the terminal device accesses a first CHO cell.

11. The method according to claim 9 or 10, wherein the other cell configurations comprise one or more of the first CHO cell configuration, the second CPAC candidate cell configuration, and the third CPAC candidate cell configuration.

12. A method for wireless communication, comprising:
transmitting, by a network device, first candidate cell configuration information to a terminal device, wherein the first candidate cell configuration information comprises one or more of the following: a first conditional primary secondary cell (PSCell) addition/change (CPAC) candidate cell configuration associated with a first conditional handover (CHO) cell configuration; a second CPAC candidate cell configuration; and a third CPAC candidate cell configuration associated with selective activation of cell groups (SACG);
wherein storage manners of at least two of the first CPAC candidate cell configuration, the second CPAC candidate cell configuration, and the third CPAC candidate cell configuration are different; and/or
transmission manners of at least two of the first CPAC candidate cell configuration, the second CPAC candidate cell configuration, and the third CPAC candidate cell configuration are different; and/or
validity times of at least two of the first CPAC candidate cell configuration, the second CPAC candidate cell configuration, and the third CPAC candidate cell configuration are different.

13. The method according to claim 12, wherein information for transmitting the first CPAC candidate cell configuration is first information, information for transmitting the second CPAC candidate cell configuration is second information, and information for transmitting the third CPAC candidate cell configuration is third information,
wherein the transmission manners of at least two of the first CPAC candidate cell configuration, the second CPAC candidate cell configuration, and the third CPAC candidate cell configuration being different comprises one or more of the following:
at least two of the first information, the second information, and the third information are different;
at least two of the first information, the second information, and the third information are different information elements (IEs) within same information;
at least two of the first information, the second information, and the third information correspond to different information nested manners.

14. The method according to claim 12 or 13, wherein the first candidate cell configuration information carries first indication information, wherein the first indication information indicates that the first candidate cell configuration information is one of the first CPAC candidate cell configuration, the second CPAC candidate cell configuration, and the third CPAC candidate cell configuration.

15. The method according to any one of claims 12 to 14, wherein the validity times of at least two of the first CPAC candidate cell configuration, the second CPAC candidate cell configuration, and the third CPAC candidate cell configuration being different comprises that: at least two of the first CPAC candidate cell configuration, the second CPAC candidate cell configuration, and the third CPAC candidate cell configuration do not become valid at the same time as predefined by a protocol.

16. The method according to any one of claims 12 to 15, wherein a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable,
wherein the storage manners of at least two of the first CPAC candidate cell configuration, the second CPAC candidate cell configuration, and the third CPAC candidate cell configuration being different comprises:
at least two of the first variable, the second variable, and the third variable being different; and/or
at least two of the first variable, the second variable, and the third variable being different partitions of a same variable.

17. The method according to claim 16, wherein the first CHO cell configuration corresponds to a first CHO cell, and the first candidate cell configuration information comprises the first CPAC candidate cell configuration, and in a case where the terminal device accesses the first CHO cell, other cell configurations except the first CPAC candidate cell configuration are released.

18. The method according to claim 17, wherein in a case where the first candidate cell configuration information comprises the first CPAC candidate cell configuration, the first CPAC candidate cell configuration is released by the terminal device in a case where a first condition is fulfilled, wherein the first condition comprises one or more of the following:
the terminal device enters an idle state;
the terminal device enters an inactive state;
a timer T304 of the terminal device expires;
the terminal device receives a radio resource control (RRC) release message;
CHO for a first CHO cell by the terminal device fails;
the terminal device completes a CHO and CPAC procedure associated with the first CPAC candidate cell configuration; and
the terminal device selects another cell other than the first CHO cell during running of a timer T311.

19. The method according to claim 16, wherein the first candidate cell configuration information comprises the third CPAC candidate cell configuration, and other cell configurations except the third CPAC candidate cell configuration are released in a case where the terminal device successfully performs conditional PSCell addition (CPA) or conditional PSCell change (CPC) based on the third CPAC candidate cell configuration.

20. The method according to claim 16, wherein the first candidate cell configuration information comprises both the first CPAC candidate cell configuration and the third CPAC candidate cell configuration, and other cell configurations except the first CPAC candidate cell configuration and the third CPAC candidate cell configuration are released in a case where the terminal device accesses a first CHO cell.

21. The method according to claim 19 or 20, wherein the other cell configurations comprise one or more of the first CHO cell configuration, the second CPAC candidate cell configuration, and the third CPAC candidate cell configuration.

22. A terminal device, comprising:
a receiving unit configured to receive first candidate cell configuration information transmitted by a network device, wherein the first candidate cell configuration information comprises one or more of the following: a first conditional primary secondary cell (PSCell) addition/change (CPAC) candidate cell configuration associated with a first conditional handover (CHO) cell configuration; a second CPAC candidate cell configuration; and a third CPAC candidate cell configuration associated with selective activation of cell groups (SACG);
wherein storage manners of at least two of the first CPAC candidate cell configuration, the second CPAC candidate cell configuration, and the third CPAC candidate cell configuration are different; and/or
transmission manners of at least two of the first CPAC candidate cell configuration, the second CPAC candidate cell configuration, and the third CPAC candidate cell configuration are different; and/or
validity times of at least two of the first CPAC candidate cell configuration, the second CPAC candidate cell configuration, and the third CPAC candidate cell configuration are different.

23. The terminal device according to claim 22, wherein information for transmitting the first CPAC candidate cell configuration is first information, information for transmitting the second CPAC candidate cell configuration is second information, and information for transmitting the third CPAC candidate cell configuration is third information,
wherein the transmission manners of at least two of the first CPAC candidate cell configuration, the second CPAC candidate cell configuration, and the third CPAC candidate cell configuration being different comprises one or more of the following:
at least two of the first information, the second information, and the third information are different;
at least two of the first information, the second information, and the third information are different information elements (IEs) within same information;
at least two of the first information, the second information, and the third information correspond to different information nested manners.

24. The terminal device according to claim 22 or 23, wherein the first candidate cell configuration information carries first indication information, wherein the first indication information indicates that the first candidate cell configuration information is one of the first CPAC candidate cell configuration, the second CPAC candidate cell configuration, and the third CPAC candidate cell configuration.

25. The terminal device according to any one of claims 22 to 24, wherein the validity times of at least two of the first CPAC candidate cell configuration, the second CPAC candidate cell configuration, and the third CPAC candidate cell configuration being different comprises that: at least two of the first CPAC candidate cell configuration, the second CPAC candidate cell configuration, and the third CPAC candidate cell configuration do not become valid at the same time as predefined by a protocol.

26. The terminal device according to any one of claims 22 to 25, wherein a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable,
wherein the storage manners of at least two of the first CPAC candidate cell configuration, the second CPAC candidate cell configuration, and the third CPAC candidate cell configuration being different comprises:
at least two of the first variable, the second variable, and the third variable being different; and/or
at least two of the first variable, the second variable, and the third variable being different partitions of a same variable.

27. The terminal device according to claim 26, wherein the first CHO cell configuration corresponds to a first CHO cell, and in a case where the first candidate cell configuration information comprises the first CPAC candidate cell configuration, the terminal device further comprises:
a first processing unit configured to store the first CPAC candidate cell configuration into the first variable in a case where the terminal device determines the first CHO cell based on CHO.

28. The terminal device according to claim 27, further comprising:
a second processing unit configured to release other cell configurations except the first CPAC candidate cell configuration in a case where the terminal device accesses the first CHO cell.

29. The terminal device according to claim 26, wherein in a case where the first candidate cell configuration information comprises the first CPAC candidate cell configuration, the terminal device further comprises:
a third processing unit configured to release the first CPAC candidate cell configuration in a case where a first condition is fulfilled, wherein the first condition comprises one or more of the following:
the terminal device enters an idle state;
the terminal device enters an inactive state;
a timer T304 of the terminal device expires;
the terminal device receives a radio resource control (RRC) release message;
CHO for a first CHO cell by the terminal device fails;
the terminal device completes a CHO and CPAC procedure associated with the first CPAC candidate cell configuration; and
the terminal device selects another cell other than the first CHO cell during running of a timer T311.

30. The terminal device according to claim 26, wherein in a case where the first candidate cell configuration information comprises the third CPAC candidate cell configuration, the terminal device further comprises:
a fourth processing unit configured to release other cell configurations except the third CPAC candidate cell configuration in a case where the terminal device successfully performs conditional PSCell addition (CPA) or conditional PSCell change (CPC) based on the third CPAC candidate cell configuration.

31. The terminal device according to claim 26, wherein in a case where the first candidate cell configuration information comprises both the first CPAC candidate cell configuration and the third CPAC candidate cell configuration, the terminal device further comprises:
a fifth processing unit configured to release other cell configurations except the first CPAC candidate cell configuration and the third CPAC candidate cell configuration in a case where the terminal device accesses a first CHO cell.

32. The terminal device according to claim 30 or 31, wherein the other cell configurations comprise one or more of the first CHO cell configuration, the second CPAC candidate cell configuration, and the third CPAC candidate cell configuration.

33. A network device, comprising:
a transmitting unit configured to transmit first candidate cell configuration information to a terminal device, wherein the first candidate cell configuration information comprises one or more of the following: a first conditional primary secondary cell (PSCell) addition/change (CPAC) candidate cell configuration associated with a first conditional handover (CHO) cell configuration; a second CPAC candidate cell configuration; and a third CPAC candidate cell configuration associated with selective activation of cell groups (SACG);
wherein storage manners of at least two of the first CPAC candidate cell configuration, the second CPAC candidate cell configuration, and the third CPAC candidate cell configuration are different; and/or
transmission manners of at least two of the first CPAC candidate cell configuration, the second CPAC candidate cell configuration, and the third CPAC candidate cell configuration are different; and/or
validity times of at least two of the first CPAC candidate cell configuration, the second CPAC candidate cell configuration, and the third CPAC candidate cell configuration are different.

34. The network device according to claim 33, wherein information for transmitting the first CPAC candidate cell configuration is first information, information for transmitting the second CPAC candidate cell configuration is second information, and information for transmitting the third CPAC candidate cell configuration is third information,
wherein the transmission manners of at least two of the first CPAC candidate cell configuration, the second CPAC candidate cell configuration, and the third CPAC candidate cell configuration being different comprises one or more of the following:
at least two of the first information, the second information, and the third information are different;
at least two of the first information, the second information, and the third information are different information elements (IEs) within same information; and
at least two of the first information, the second information, and the third information correspond to different information nested manners.

35. The network device according to claim 33 or 34, wherein the first candidate cell configuration information carries first indication information, wherein the first indication information indicates that the first candidate cell configuration information is one of the first CPAC candidate cell configuration, the second CPAC candidate cell configuration, and the third CPAC candidate cell configuration.

36. The network device according to any one of claims 33 to 35, wherein the validity times of at least two of the first CPAC candidate cell configuration, the second CPAC candidate cell configuration, and the third CPAC candidate cell configuration being different comprises that: at least two of the first CPAC candidate cell configuration, the second CPAC candidate cell configuration, and the third CPAC candidate cell configuration do not become valid at the same time as predefined by a protocol.

37. The network device according to any one of claims 33 to 36, wherein a storage variable corresponding to the first CPAC candidate cell configuration is a first variable, a storage variable corresponding to the second CPAC candidate cell configuration is a second variable, and a storage variable corresponding to the third CPAC candidate cell configuration is a third variable,
wherein the storage manners of at least two of the first CPAC candidate cell configuration, the second CPAC candidate cell configuration, and the third CPAC candidate cell configuration being different comprises:
at least two of the first variable, the second variable, and the third variable being different; and/or
at least two of the first variable, the second variable, and the third variable being different partitions of a same variable.

38. The network device according to claim 37, wherein the first CHO cell configuration corresponds to a first CHO cell, and the first candidate cell configuration information comprises the first CPAC candidate cell configuration, and in a case where the terminal device accesses the first CHO cell, other cell configurations except the first CPAC candidate cell configuration are released.

39. The network device according to claim 38, wherein in a case where the first candidate cell configuration information comprises the first CPAC candidate cell configuration, the first CPAC candidate cell configuration is released by the terminal device in a case where a first condition is fulfilled, wherein the first condition comprises one or more of the following:
the terminal device enters an idle state;
the terminal device enters an inactive state;
a timer T304 of the terminal device expires;
the terminal device receives a radio resource control (RRC) release message;
CHO for the first CHO cell by the terminal device fails;
the terminal device completes a CHO and CPAC procedure associated with the first CPAC candidate cell configuration; and
the terminal device selects another cell other than the first CHO cell during running of a timer T311.

40. The network device according to claim 37, wherein the first candidate cell configuration information comprises the third CPAC candidate cell configuration, and other cell configurations except the third CPAC candidate cell configuration are released in a case where the terminal device successfully performs conditional PSCell addition (CPA) or conditional PSCell change (CPC) based on the third CPAC candidate cell configuration.

41. The network device according to claim 37, wherein the first candidate cell configuration information comprises both the first CPAC candidate cell configuration and the third CPAC candidate cell configuration, and other cell configurations except the first CPAC candidate cell configuration and the third CPAC candidate cell configuration are released in a case where the terminal device accesses a first CHO cell.

42. The network device according to claim 40 or 41, wherein the other cell configurations comprise one or more of the first CHO cell configuration, the second CPAC candidate cell configuration, and the third CPAC candidate cell configuration.

43. A terminal device, comprising a transceiver, a memory, and a processor, wherein the memory is configured to store a program, the processor is configured to invoke the program stored in the memory and control the transceiver to receive or transmit signals, so as to cause the terminal device to perform the method according to any one of claims 1 to 11.

44. A network device, comprising a transceiver, a memory, and a processor, wherein the memory is configured to store a program, the processor is configured to invoke the program stored in the memory and control the transceiver to receive or transmit signals, so as to cause the network device to perform the method according to any one of claims 12 to 21.

45. An apparatus, comprising a processor configured to invoke a program from a memory, so as to cause the apparatus to perform the method according to any one of claims 1 to 21.

46. A chip, comprising a processor configured to invoke a program from a memory, so as to cause a device equipped with the chip to perform the method according to any one of claims 1 to 21.

47. A computer-readable storage medium, storing a program therein, wherein the program causes a computer to perform the method according to any one of claims 1 to 21.

48. A computer program product, comprising a program, wherein the program causes a computer to perform the method according to any one of claims 1 to 21.

49. A computer program, wherein the computer program causes a computer to perform the method according to any one of claims 1 to 21.
